**Europäisches Patentamt**

**European Patent Office**

**Office européen des brevets**

(19)

(11) Veröffentlichungsnummer : **0 010 627 B1**

# EUROPÄISCHE PATENTSCHRIFT

(12)

(45) Veröffentlichungstag der Patentschrift :
02.12.81

(51) Int. Cl.³ : **C 21 B 13/00, C 21 B 13/14**

(21) Anmeldenummer : 79103710.4

(22) Anmeldetag : 28.09.79

(54) **Verfahren und Anlage zur Erzeugung von flüssigem Roheisen und Reduktionsgas in einem Einschmelzvergaser.**

(30) Priorität : 04.10.78 DE 2843303

(43) Veröffentlichungstag der Anmeldung :
14.05.80 (Patentblatt 80/10)

(45) Bekanntmachung des Hinweises auf die Patenterteilung : 02.12.81 Patentblatt 81/48

(84) Benannte Vertragsstaaten :
AT BE CH FR IT LU NL SE

(56) Entgegenhaltungen :
CH - A - 366 295
CH - A - 379 542
DE - A - 2 655 813
DE - B - 1 271 133
DE - B - 2 401 909

(73) Patentinhaber : **Korf-Stahl AG**
**Moltkestrasse 15**
**D-7570 Baden-Baden (DE)**

(72) Erfinder : **Weber, Ralph, Dipl.-Ing.**
**R.Prof.Luciano Gualberto**
**Bairro Morumbi, Sao Paulo (BR)**
Erfinder : **Elsner, Emil, Dr.-Ing.**
**Herrenäckerstrasse 5**
**D-7570 Baden-Baden 21 (DE)**
Erfinder : **Maschlanka, Walter, Dr.-Ing.**
**Zeppelinstrasse 2**
**7560 Gaggenau (DE)**
Erfinder : **Rollinger, Bernt, Dipl.-Ing.**
**Kohlenweg**
**7570 Baden-Baden 11 (DE)**
Erfinder : **Sanders, Gerhard, Dipl.-Ing.**
**Silberstrasse 1**
**7570 Baden-Baden (DE)**

(74) Vertreter : **Blumbach Weser Bergen Kramer Zwirner**
**Brehm Patentanwälte**
**Radeckestrasse 43**
**D-8000 München 60 (DE)**

## Verfahren und Anlage zur Erzeugung von flüssigem Roheisen und Reduktionsgas in einem Einschmelzvergaser

Die Erfindung betrifft ein Verfahren gemäß dem Oberbegriff des Patentanspruches 1.

Bei Verfahren dieser Art besteht das Problem, einerseits im Einschmelzvergaser die zum Einschmelzen des Eisenschwamms erforderliche hohe Temperatur und anderseits ein hochwertiges Reduktionsgas in wirtschaftlicher Weise zu erzeugen. Bei dem durch die CH-PS 379 542 bekannten Verfahren wird deshalb im Schmelzgefäß ein Kohlenstoffhaltiger Brennstoff mit einem sauerstoffhaltigen Gas so verbrannt, daß eine oxidierende Atmosphäre entsteht, die die für den Schmelzprozeß erforderliche Temperatur — es ist ein Temperaturbereich von 1 595 bis 1 925 °C angegeben — gewährleistet. Das das Schmelzgefäß verlassende Gas wird in einer gesonderten Reformierzone, in welcher ein Überschuß an Brennstoff mit Sauerstoff verbrannt wird, einer Anreicherungsbehandlung unterworfen. Den Brennern wird körnige oder gepulverte Kohle zugeführt und als sauerstoffreiches Gas wird vorzugsweise technisches Sauerstoffgas verwendet. Da zur Erzeugung der erforderlichen Einschmelztemperatur im Einschmelzgefäß eine oxidierende Atmosphäre vorhanden ist, wird zum Schutz des geschmolzenen Eisens gegen Rückoxidation und zur Vervollständigung der Reduktion dem zugeführten Eisenschwamm Kohle beigemischt oder Kohle getrennt in das Einschmelzgefäß eingeführt. Der zusätzliche Kohlenstoff wird von der flüssigen Schlacke und dem flüssigen Metall aufgenommen und bewirkt unter dem Einfluß der in dem Einschmelzgefäß herrschenden Temperatur die weitere Reduktion von Eisenoxid, während gleichzeitig das geschmolzene Eisen gegen Rückoxidation geschützt wird.

Nachteilig an dem bekannten Verfahren ist, daß für die Brenner nur aufbereitete körnige oder pulverförmige Kohle verwendet werden kann und die Aufbereitung hohe Kosten verursacht, daß die in das Einschmelzgefäß chargierten Eisenschwammpartikel, bis sie in den Bereich der Schmelze gelangen, eine oxidierende Atmosphäre vorfinden, in der kleine Eisenschwammteilchen vollständig rückoxidiert werden, so daß das Verfahren nur für die Verarbeitung von stückigem Eisenschwamm geeignet erscheint und daß eine besondere Reformierzone zur Anreicherung des Reduktionsgases erforderlich ist.

Durch die CH-PS 366 295 ist ein Verfahren zur Verhüttung von oxidischen Erzen in einem elektrischen Reduktionsofen bekannt geworden, bei dem das zu reduzierende Erz in einer Korngröße von 0,0001 bis 8 mm in ein sich im Schwebezustand befindliches Kohlebett aus Kohleteilchen mit einer Korngröße von 0,001 bis 8 mm gestreut wird, welches infolge Hindurchleitens elektrischen Stromes erhitzt ist.

Ein solches Verfahren kann nur bis zu einer Partikelgröße der Eisenschwammteilchen von etwa 1 mm wirtschaftlich betrieben werden.

Größere Eisenoxidteilchen machen hohe Gasgeschwindigkeiten erforderlich, die nur unter großem technischem Aufwand realisierbar sind eine Verweilzeit der Eisenoxidteilchen im Kohlefließbett in der Größenordnung von Stunden und schließlich ein sehr enges Kornband der Eisenoxidteilchen, das eine aufwendige Erzagglomerierung bzw. -klassierung voraussetzt.

Ziel der Erfindung ist ein Verfahren der einleitend genannten Art, bei dem geringwertige Kohle ohne aufwendige Aufbereitung verwendet werden kann und im Einschmelzgefäß bei hoher Schmelztemperatur im wesentlichen eine reduzierende Atmosphäre aufrecht erhalten wird, so daß neben größeren auch kleinere Eisenschwammteilchen eingesetzt werden können. Es soll im Einschmelzgefäß ein hochwertiges Reduktionsgas erzeugt werden können, das keiner zusätzlichen Anreicherung mehr bedarf und es soll eine optimale Ausnutzung der Wärme der Reaktionsstoffe ermöglicht werden.

Das erfindungsgemäße Verfahren ist durch die Merkmale des Patentanspruches 1, die Vorrichtung zur Durchführung dieses Verfahrens durch die Merkmale des Anspruches 28 gekennzeichnet.

Die Erfindung beruht auf der Erkenntnis, daß sich mittels eines heißen Kohlefließbettes ausreichender Höhe im Schmelzgefäß nicht nur in einer Hochtemperaturzone im unteren Bereich des Kohlefließbettes, die sich unmittelbar an die Schmelze anschließen soll, eine Temperatur zwischen 2 000 und 2 500 °C erzielen läßt, so daß hier auch stückiger Eisenschwamm sehr schnell aufgeschmolzen wird, sondern daß dieses Kohlefließbett auch für stückigen Eisenschwamm stark abbremsend wirkt, so daß auch für diesen eine ausreichende Verweilzeit im Kohlefließbett in der Größenordnung von einigen Sekunden gewährleistet ist, um ihn im Wärmeaustausch mit dem Kohlefließbett um einige hundert °C aufzuwärmen, so daß der stark abgebremste und damit im Bereich der Schlacke aufgefangene Eisenschwamm hier schnell aufgeschmolzen werden kann. Feinkörniger Eisenschwamm hat im Kohlefließbett eine so lange Verweilzeit, daß dieser bereits hier aufgeschmolzen, zumindest aber im gewünschten Maße erwärmt wird. Besonders günstige Verhältnisse werden geschaffen, wenn der Eisenschwamm bereits vorerwärmt eingegeben wird, also z. B. mit einer Temperatur von 750 °C, wie er aus einem Reduktionsaggregat unmittelbar gewonnen wird. Vorteilhaft ist es, wenn der Eisenschwamm mit einer Temperatur von 500° bis 950 °C, vorzugsweise mit einer Temperatur von 500° bis 850 °C, zugeführt wird.

Zur Erzeugung einer sehr hohen Temperatur in der Heißtemperaturzone erscheint es wesentlich, daß in diese vorerhitzter Sauerstoff eingeblasen wird. Die Temperatur des vorerhitzten Sauerstoffs sollte zwischen 200° und 800 °C liegen. Vorzugsweise ist sie auf einen Wert von 450 °C begrenzt und liegt zwischen 350° und 450 °C. In diesen Sauerstoffstrahl wird eine überschüssige Menge an Kohlenstoffpartikeln aus dem benachbarten Bereich des Kohlefließbettes eingezogen, so daß eine stark strahlende Flamme entsteht, die einen guten Wärmeübergang zum aufzuschmelzenden Eisenschwamm gewährleistet. Andererseits erniedrigt sich die Temperatur des Kohlefließbettes durch verschiedene endotherme Reaktionen von der Hochtemperaturzone mit einem Temperaturwert zwischen 2 000 und 2 500 °C nach oben bis auf einen Wert zwischen 1 000 und 1 400 °C, so daß das Reduktionsgas das Einschmelzgefäß mit ungefähr dieser Temperatur verläßt. Temperatur und Zusammensetzung des Reduktionsgases sind weiterhin durch Einblasen von Wasserdampf oder Kohlenwasserstoffen etwa in mittlerer Höhe des Kohlefließbettes steuerbar. Vorzugsweise werden die Temperaturverhältnisse des Kohlefließbettes so eingestellt, daß der Wert in der Hochtemperaturzone zwischen 2 200 und 2 400 °C liegt und die Temperatur nach oben bis zu einem Wert zwischen 1 100 und 1 300 °C abnimmt. Die genannten Temperaturverhältnisse ermöglichen eine sofortige Verkokung zugesetzter Kohle, wobei größere Kohlestücke zerplatzen, so daß selbst bei Verwendung unklassierter Kohle einer Korngröße von etwa 12 mm sich ein Fließbett ausbildet, bei dem die Korngröße der Kokspartikel im wesentlichen zwischen 2 und 3 mm liegt. Der Hauptanteil der Kokspartikel soll eine Korngröße zwischen 1 und 4 mm aufweisen. Bei Zugabe von Kohle stellt sich also die gewünschte Partikelgröße im Fließbett ein, selbst wenn Kohle bis zu einer Größe von 12 mm zugeführt wird. Wird Koksgrus zugeführt, dann ist es zweckmäßig, die Partikelgröße auf 6 mm zu begrenzen. Auch bei Zugabe von Braunkohle ist es erforderlich, die Korngröße so zu wählen, daß das gewünschte Kohlefließbett erhalten wird.

Die Arbeitsweise gestattet das vollständige Kracken von schweren Kohlenwasserstoffen und garantiert bei ausreichender Fließbetthöhe zwischen 1,5 und 2,5 m Gaszusammensetzungen, bei denen der Anteil an CO und $H_2$ mehr als 85 % beträgt. Es wird somit ohne zusätzliche Anreicherung ein hervorragendes Reduktionsgas gewonnen und es kann billige Kohle ohne kostenaufwendige Aufbereitung verwendet werden. Zur Kühlung des Kohlefließbettes kann auch Feinerz zugesetzt werden, das an der Fluidisierung teilnimmt und im Kohlefließbett reduziert und eingeschmolzen wird. Werden Feinerze von Nichteisenmetallen zugesetzt, so kann damit die Schmelze auflegiert werden.

Das gewonnene hochwertige Reduktionsgas kann als Reduktionsgas in einem Reduktionsaggregat wie einem Direktreduktionsschachtofen eingesetzt werden. Es kann aber auch einem Hochofen zugeführt werden, um im Hochofenprozeß durch das Reduktionsgas hochwertigen Koks zu ersetzen. So läßt sich ein Kilogramm Koks durch etwa 3 bis 4 $Nm^3 CO/H_2$ bei 1 000 °C ersetzen. Es können auf diese Weise etwa bis zu 20 % Koks durch Reduktionsgas ersetzt werden. Das Reduktionsgas kann selbstverständlich auch anderweitig eingesetzt werden.

Die Erfindung wird durch Ausführungsbeispiele anhand von zwei Figuren näher erläutert. Es zeigen :

Fig. 1 einen Einschmelzvergaser zur Durchführung des Erfindungsgemäßen Verfahrens ;

Fig. 2 schematisch den Einsatz dieses Einschmelzvergasers in einem Prozeß zur Herstellung von Roheisen aus Eisenerz.

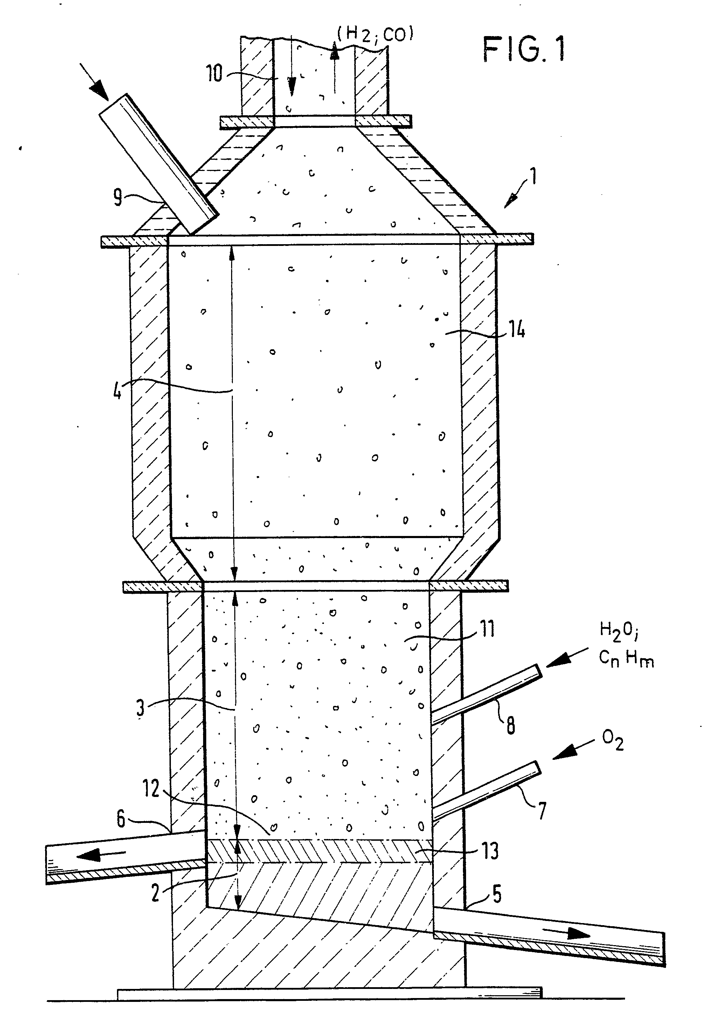

Der als ein Ausführungsbeispiel in Fig. 1 dargestellte Einschmelzvergaser 1 weist einen unteren Abschnitt 2, in dem sich Roheisen und Schlacke befinden, einen mittleren Abschnitt 3 für ein Kohlefließbett und einen erweiterten oberen Abschnitt 4, der als Beruhigungsraum dient, auf. Bei einem auf Grundlage praktischer Versuche dimensionierten Einschmelzvergaser liegt die Höhe des für das Kohlefließbett vorgesehenen mittleren Abschnittes 3 bei 2,5 m und die Höhe des oberen Abschnittes 4 bei 3 m. Der Innendurchmesser im mittleren und unteren Bereich beträgt etwa 3,2 m. Zum Abstich von Roheisen und Schlacke sind im Bereich des unteren Abschnittes 2 die Öffnungen 5 und 6 vorgesehen, zum Einblasen eines sauerstoffhaltigen Gases Rohre bzw. Düsen 7, von denen nur eine dargestellt ist, in einer Höhe, die nur wenig über dem Schlackenspiegel im unteren Viertel des mittleren Abschnitts 3 liegt, und zum Einblasen von Wasserdampf oder Kohlenwasserstoffen Rohre bzw. Düsen 8 etwa in mittlerer Höhe des Abschnittes 3. In diesem Beispiel ist für die Zufuhr von Kohle im oberen Bereich des Einschmelzvergasers eine Öffnung 9 und für die Zugabe des Eisenschwamms sowie zum Abzug des Reduktionsgases eine Öffnung 10 vorgesehen.

Durch die im folgenden näher beschriebenen Verfahrensbedingungen bildet sich im mittleren Abschnitt 3 des Einschmelzvergasers ein Kohlefließbett 11 aus mit einer Hochtemperaturzone 12 im unteren, an die Schlackenschicht 13 angrenzenden Bereich des Kohlefließbettes. Hier herrschen Temperaturen zwischen 2 000 und 2 500 °C. Die Temperaturen des Kohlefließbettes nehmen von der Hochtemperaturzone nach oben hin ab und erreichen Werte zwischen 1 000 und 1 400 °C im oberen Bereich des Kohlefließbettes, an den sich der Beruhigungsraum 14 anschließt. Durch die Öffnung 9 wird vorzugsweise kontinuierlich Kohle zugeführt, die dann über den Beruhigungsraum in das Kohlefließbett gelangt. Hierbei kann es sich um minderwertige billige Kohle handeln, die für andere Prozesse nicht einsetzbar ist. Die Kohle kann normalerweise in einem Kornband bis 12 mm zugeführt werden, da sie größeren Kohlestückchen wegen der hohen Temperatur schlagartig entgast werden und zerplatzen. Im Kohlefließbett sind daher im wesentlichen Kokspartikel einer Größe zwischen 2 und 3 mm vorhanden. Diese nehmen die oben angegebenen Temperaturen an, so daß dem über die Düsen 7 eingeblasenen, möglichst auf Temperaturen zwischen 350 und 450 °C vorerhitzten Sauerstoff für die Verbrennung im Einschmelzvergaser hocherhitzte Kokspartikel im Überschuß zur Verfügung stehen, wodurch sich eine stark strahlende Flamme der genannten Temperatur in der Hochtemperaturzone ergibt, die das Aufschmelzen des Eisenschwamms begünstigt. Die Sauerstoffzufuhr erfolgte bei praktischen Versuchen mit einer Geschwindigkeit zwischen 20 und 40 m pro Sekunde. Die Geschwindigkeit des im Kohlefließbett aufsteigenden Trägergases konnte im Hinblick auf einen möglichst geringen Austrag an Kohle unterhalb eines Wertes von 25 cm/sec gehalten werden. Sie sollte stets kleiner als 0,4 m/sek bezogen auf Normalzustand sein.

Der über die Öffnung 10 eingegebene Eisenschwamm wird im Kohlefließbett merklich abgebremst und bis zum Eintritt in die Hochtemperaturzone 12 um einige 100 °C erwärmt. Die Geschwindigkeit ist dann bereits so stark abgefallen, daß in der Regel die Schlackenschicht nicht mehr durchschlagen wird, sondern der Eisenschwamm auf der Schlacke schwimmt und damit im Bereich sehr hoher Temperaturen auf oder innerhalb der Schlackenschicht schnell aufgeschmolzen wird. Untersuchungen haben ergeben, daß bei einer Höhe des Kohlefließbettes 11 und des Beruhigungsraumes 14 von jeweils 2 m, einer Höhe der Schlackenschicht von 0,3 m, einer Temperatur in der Hochtemperaturzone 12 von etwa 2 200 °C und im oberen Bereich des Kohlefließbettes 11 von 1 200 °C, d. h. bei einer mittleren Temperatur des Kohlefließbettes von 1 700 °C, einem mittleren Durchmesser der das Fließbett bildenden Kohlekörner von 3 mm und einem mittleren Durchmesser der Eisenschwammpartikel von 10 mm, die mit einer Temperatur von 750 °C zugegeben werden, diese praktisch ungehindert innerhalb weniger als einer Sekunde durch den Beruhigungsraum 14 fallen, wobei sich ihre Temperatur nur unwesentlich erhöht. Ihre Fallgeschwindigkeit steigt von 0 auf etwa 6 m/s an. Die Eisenschwammpartikel werden im heißen Kohlefließbett 11 von etwa 6 m/s auf etwa 0,6 m/s, also merklich abgebremst, wodurch sich hier ihre Verweilzeit auf ca. 3 sek erhöht. Dabei werden die Eisenschwammpartikel durch den Wärmeaustausch mit dem Kohlefließbett von 750 °C auf mehr als 1 000 °C erwärmt. Sie treffen mit der erniedrigten Geschwindigkeit auf die Schlackenschicht, die eine Temperatur von etwa 1 700 °C aufweist und werden auf oder in der Schlackenschicht innerhalb einer sehr kurzen Zeit aufgeschmolzen. Maßgeblich für den Abbremseffekt und damit die gewünschte Verweilzeit im Kohlefließbett ist der Staudruck der Kohlepartikel und der Auftrieb. Staudruck und Auftrieb und damit auch die Verweilzeit sind wiederum abhängig von der zugeführten Menge an Sauerstoffhaltigem Gas und an Kohle, von dem Verhältnis dieser Mengen zueinander sowie von der Größe der Kokspartikel im Kohlefließbett, die einen Mindestwert von 1 mm nicht unterschreiten sollen. Für die Verweilzeit sind daneben die Höhe des Kohlefließbettes sowie die Größe der Eisenschwammpartikel maßgeblich, die 30 mm nicht überschreiten sollten. Außerdem hängt die Verweilzeit von der Fallgeschwindigkeit der Eisenschwammpartikel beim Eintritt in das Kohlefließbett ab. Der Wärmetausch zwischen den Eisenschwammpartikeln und dem Kohlefließbett und damit die Erwärmung der Eisenschwammpartikel im Kohlefließbett ist neben der Verweilzeit abhängig von den Temperaturen im Fließbett und von der Größe der Eisenschwammpartikel. Vorzugsweise weisen von den zugeführten heißen Eisenschwammpartikeln mindestens 80 % eine Korngröße zwischen 3 mm und 30 mm auf. Bei Partikeln über 3 mm hat die Hitzestrahlung aus der Hochtemperaturzone einen wesentlichen Einfluß auf die Temperaturerhöhung. Feinkörnige Eisenschwammpartikel, z. B. mit einer Größe bis 3 mm, nehmen an der Fluidisierung teil bis sie in den tieferen Zonen des Kohlefließbettes schon verflüssigt ins Bad abgeschieden werden. Es läßt sich somit auch feinkörniger Eisenschwamm im Einschmelzvergaser einschmelzen.

Gute Ergebnisse wurden mit einem Verfahren erzielt, bei dem die Zufuhr des heißen Eisenschwamms, der Kohle und des sauerstoffhaltigen Gases kontinuierlich erfolgte, der Eisenschwamm mit einer Korngröße von 0 bis 25 mm gleichmäßig verteilt auf die Oberfläche des Kohlefließbettes zugegeben wurde, wobei der Anteil von über 3 mm mindestens 80 % und der Feinanteil unter 1 mm höchstens 10 % betrug, bei der zugegebenen Kohle der Anteil einer Korngröße von 1 bis 12 mm mindestens 70 % betrug und durch Regelung der zugeführten Mengen an sauerstoffhaltigem Gas und Kohle sowie ihres Verhältnisses zueinander ein Kohlefließbett gebildet wurde, das eine Verweilzeit des zugeführten Eisenschwamms einer Korngröße von 3 bis 25 mm in der Größenordnung von einigen Sekunden gewährleistete.

Das im Einschmelzvergaser 1 erzeugte Reduktionsgas besteht im wesentlichen aus CO und $H_2$ und verläßt den Vergaser über die Öffnung 10 mit einer Temperatur, die etwa der Temperatur im oberen Bereich des Kohlefließbettes entspricht, d. h. bei dem gewählten Beispiel einer Temperatur von etwa 1 200 °C. Je nach Kohlesorte bzw. Mischung verschiedener Kohlen erhält man die gewünschte Zusammensetzung und Temperatur des den Einschmelzvergaser verlassenden Reduktionsgases. Wegen der Wichtigkeit des Ablaufs der Boudouard-Reaktion einerseits und der Begrenzung durch den Ascheerweichungspunkt der Kohlen andererseits ist eine Temperatur um ca. 1 200 °C im oberen Bereich des Kohlefließbettes anzustreben. Durch Einblasen von Wasserdampf bzw. Kohlenwasserstoffen durch die Düsen 8 kann die Zusammensetzung zu höheren $H_2$-Gehalten hin bei gleichzeitiger Temperaturerniedrigung des Kohlefließbettes verschoben werden.

Wie bereits erwähnt, ist die Sauerstoffdüse 7 stellvertretend für mehrere längs des Umfangs des Einschmelzvergasers angeordnete Sauerstoffdüsen dargestellt. Diese Düsen sind vorzugsweise schräg nach unten gegen den einzuschmelzenden Eisenschwamm gerichtet. Es kann vorteilhaft sein, solche Düsen in zwei Ebenen mit unterschiedlichen Neigungswinkeln vorzusehen. Da sich die optimale Einstellung der Düsen mit der Höhe des Schlackenspiegels ändert, erscheint es vorteilhaft, wenn die Düsen im Neigungswinkel verstellbar sind, so daß sie während des Einschmelzprozesses stets auf den optimalen Neigungswinkel eingestellt werden können. Man kann aber auch durch kontinuierlichen Abzug des Roheisens und der Schlacke dafür Sorge tragen, daß der Schlackenspiegel stets etwa in der gleichen Höhe gehalten wird. Eine weitere Möglichkeit, insbesondere beim Anfahren des Prozesses, bietet sich durch das Einbringen eines Koksgerüstes, in dem die herabfallenden Eisenschwammteilchen festgehalten werden und dann in der Hochtemperaturzone aufgeschmolzen werden können. Die Düsen 7 brauchen nicht zum Zentrum des Kohlefließbettes hin gerichtet sein. Sie können auch exzentrisch angeordnet sein. Hierdurch kann je nach Abmessungen des Einschmelzvergasers im mittleren Abschnitt 3 eine gleichmäßigere Vergasung erzielt werden. Ist der Durchmesser dieses Abschnittes sehr groß, überschreitet er beispielsweise 4 m, dann kann es vorteilhaft sein, neben den seitlich eingeführten Düsen auch von der Mitte her Düsen vorzusehen, die in einer zentralen bis in den mittleren Abschnitt 3 reichenden Erhebung vorgesehen sind.

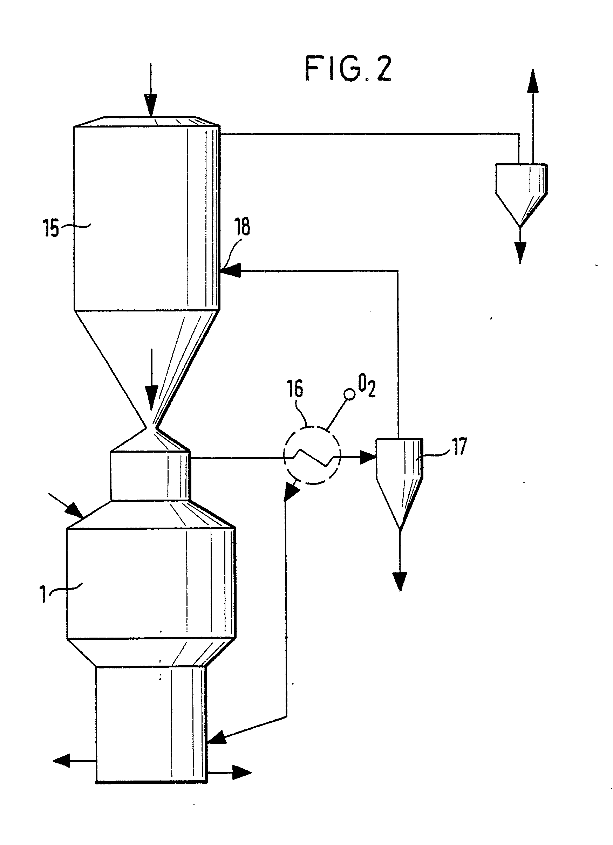

Fig. 2 stellt schematisch den Einsatz des beschriebenen Einschmelzvergasers in einer kombinierten Anlage zur Herstellung von flüssigem Roheisen aus oxidischen Eisenerzen dar.

Oberhalb des Einschmelzvergasers 1 ist ein Direktreduktions-Schachtofen 15 angeordnet, dem das im Einschmelzvergaser gewonnene Reduktionsgas, nachdem es in einem Wärmetauscher 16 einen Teil seiner fühlbaren Wärme an den vorzuwärmenden Sauerstoff für den Einschmelzvergaser abgegeben hat und nachdem es von den mitgeführten Kohleteilchen in einem Zyklon 17 befreit worden ist, an der Stelle 18 zugegeben wird. Das im Reduktionsschachtofen 15 reduzierte Eisenerz gelangt als etwa 750 °C heißer Eisenschwamm in den Einschmelzvergaser 1 und wird dort wie beschrieben zu Roheisen geschmolzen.

Aus wirtschaftlichen Gründen ist es zweckmäßig, die Höhe des Kohlefließbettes im Einschmelzvergaser auf 3,5 m zu begrenzen. Vorzugsweise liegt sie im Bereich von 2 und 2,5 m.

**Ansprüche**

1. Verfahren zur Erzeugung von flüssigem Roheisen und Reduktionsgas in einem Einschmelzvergaser, in dem heiße Eisenschwammpartikel, gegebenenfalls unter Zugabe von Zuschlagstoffen, zu flüssigem Roheisen oder Stahlvormaterial eingeschmolzen werden und aus zugeführter Kohle und oberhalb der Schmelze eingeblasenem sauerstoffhaltigem Gas die zum Schmelzen erforderliche Wärme und Reduktionsgas erzeugt werden, dadurch gekennzeichnet, daß im Einschmelzvergaser ein Kohlefließbett gebildet wird, dessen Temperatur im unteren Bereich durch die dort erfolgende Zufuhr des sauerstoffhaltigen Gases auf einem Wert zwischen 2 000 und 2 500 °C gehalten wird (Hochtemperaturzone), dessen Temperatur nach oben bis zu einem Wert zwischen 1 000 und 1 400 °C abnimmt und dessen Höhe wenigstens 1,5 m beträgt, so daß auch für größere Eisenschwammpartikel mit einer Größe oberhalb 3 mm durch die Staudruck- und Auftriebskraft im Kohlefließbett eine Verweilzeit in der Größenordnung von einigen Sekunden gewährleistet ist.

2. Verfahren nach Anspruch 1, dadurch gekennzeichnet, daß die Temperatur des Kohlefließbettes von einem Wert zwischen 2 200 und 2 400 °C in der Hochtemperaturzone nach oben bis zu einem Wert zwischen 1 100 und 1 300 °C abnimmt.

3. Verfahren nach Anspruch 1 oder 2, dadurch gekennzeichnet, daß das Kohlefließblett im wesentlichen Kokspartikel einer Größe zwischen 1 und 4 mm enthält.

4. Verfahren nach Anspruch 3, dadurch gekennzeichnet, daß das Kohlefließbett im wesentlichen Kokspartikel einer Größe zwischen 2 und 3 mm enthält.

5. Verfahren nach einem der Ansprüche 1 bis 4, dadurch gekennzeichnet, daß dem Kohlefließbett Kohle einer Partikelgröße bis zu 12 mm zugeführt wird.

6. Verfahren nach einem der Ansprüche 1 bis 5, dadurch gekennzeichnet, daß dem Kohlefließbett Koksgrus einer Partikelgröße bis zu 6 mm zugeführt wird.

7. Verfahren nach einem der Ansprüche 1 bis 6, dadurch gekennzeichnet, daß dem Kohlefließbett Braunkohle einer Partikelgröße bis zu 6 mm zugeführt wird.

8. Verfahren nach einem der Ansprüche 1 bis 7, dadurch gekennzeichnet, daß die Höhe des Kohlefließbettes maximal 3,5 m ist.

9. Verfahren nach Anspruch 8, dadurch gekennzeichnet, daß die Höhe des Kohlefließbettes zwischen 2 und 2,5 m liegt.

10. Verfahren nach einem der Ansprüche 1 bis 9, dadurch gekennzeichnet, daß in die Hochtemperaturzone ein erhitztes sauerstoffhaltiges Gas eingeblasen wird.

11. Verfahren nach Anspruch 10, dadurch gekennzeichnet, daß in die Hochtemperaturzone erhitzter Sauerstoff einer Temperatur bis 450 °C eingeblasen wird.

12. Verfahren nach Anspruch 10, dadurch gekennzeichnet, daß in die Hochtemperaturzone sauerstoffhaltiges Gas einer Temperatur zwischen 200 und 800 °C eingeblasen wird.

13. Verfahren nach einem der Ansprüche 1 bis 12, dadurch gekennzeichnet, daß das sauerstoffhaltige Gas vom Rand unter geringer Neigung abwärts eingeblasen wird.

14. Verfahren nach einem der Ansprüche 1 bis 13, dadurch gekennzeichnet, daß das sauerstoffhaltige Gas vom Zentrum her unter geringer Neigung abwärts eingeblasen wird.

15. Verfahren nach einem der Ansprüche 1 bis 14, dadurch gekennzeichnet, daß das sauerstoffhaltige Gas mit verschiedener Neigung zueinander und/oder in verschiedenen Höhen schräg abwärts eingeblasen wird.

16. Verfahren nach einem der Ansprüche 13 bis 15, dadurch gekennzeichnet, daß das sauerstoffhaltige Gas unter sich während des Prozesses ändernder Neigung eingeblasen wird.

17. Verfahren nach einem der Ansprüche 13 bis 16, dadurch gekennzeichnet, daß das sauerstoffhaltige Gas in einer von der Vertikalschnittebene durch die Mittelachse abweichenden Ebene eingeblasen wird.

18. Verfahren nach einem der Ansprüche 1 bis 17, dadurch gekennzeichnet, daß etwa in mittlerer Höhe des Kohlefließbettes Wasserdampf und/oder Kohlenwasserstoffe eingeblasen werden.

19. Verfahren nach einem der Ansprüche 1 bis 18, dadurch gekennzeichnet, daß die Geschwindigkeit des aufsteigenden Gasstroms im Kohlefließbett kleiner als 0,4 m/sek bezogen auf Normalzustand ist.

20. Verfahren nach einem der Ansprüche 1 bis 19, dadurch gekennzeichnet, daß der Arbeitsdruck im Kohlefließbett zwischen 3 und 5 Bar liegt.

21. Verfahren nach einem der Ansprüche 1 bis 20, dadurch gekennzeichnet, daß etwa 500 bis 950 °C heißer Eisenschwamm zugeführt wird.

22. Verfahren nach Anspruch 21, dadurch gekennzeichnet, daß etwa 500 bis 850 °C heißer Eisenschwamm zugeführt wird.

23. Verfahren nach einem der Ansprüche 1 bis 22, dadurch gekennzeichnet, daß dem Kohlefließbett zusätzlich feinkörniges Erz zugeführt wird.

24. Verfahren nach einem der Ansprüche 1 bis 23, dadurch gekennzeichnet, daß wenigstens ein Teil des erzeugten Reduktionsgases, gegebenenfalls nach Aufbereitung, einem Reduktionsaggregat zugeführt wird, in dem oxidisches Eisenerz direkt zu Eisenschwammpartikeln reduziert wird und daß die reduzierten Eisenschwammpartikel im heißen Zustand dem Einschmelzvergaser zugeführt werden.

25. Verfahren nach einem der Ansprüche 1 bis 24, dadurch gekennzeichnet, daß wenigstens ein Teil des erzeugten Reduktionsgases, gegebenenfalls nach einer Aufbereitung, in einen Hochofenschacht eingeblasen wird.

26. Verfahren nach einem der Ansprüche 1 bis 25, dadurch gekennzeichnet, daß von den zugeführten heißen Eisenschwammpartikeln mindestens 80 % eine Korngröße zwischen 3 mm und 30 mm aufweisen.

27. Verfahren nach einem der Ansprüche 1 bis 26, dadurch gekennzeichnet, daß die Zufuhr des heißen Eisenschwamms, der Kohle und des sauerstoffhaltigen Gases kontinuierlich erfolgt, daß der Eisenschwamm mit einer Korngröße von 0 bis 25 mm gleichmäßig verteilt auf die Oberfläche des Kohlefließbettes zugegeben wird, wobei der Anteil von über 3 mm mindestens 80 % und der Feinanteil von unter 1 mm höchstens 10 % beträgt, daß bei der zugegebenen Kohle der Anteil einer Korngröße von 1 bis 12 mm mindestens 70 % beträgt und daß durch Regelung der zugeführten Mengen an sauerstoffhaltigem Gas und Kohle sowie ihres Verhältnisses zueinander ein Kohlefließbett gebildet wird, das eine Verweilzeit des zugeführten Eisenschwamms einer Korngröße von 3 bis 25 mm in der Größenordnung von einigen Sekunden gewährleistet.

28. Anlage zur Durchführung des Verfahrens nach einem der Ansprüche 1 bis 27, mit einem Einschmelzvergaser aus das einen unteren Abschnitt (2) zur Aufnahme von Roheisen und Schlacke, einen mittleren Abschnitt (3) mit einer Höhe von wenigstens 1,5 m für ein Kohlefließbett (11) und als Beruhigungsraum (14) einen oberen Abschnitt (4) aufweist, einem feuerfest ausgekleideten Gefäß, dessen Innendurchmesser größer als der des mittleren Abschnittes ist, mit Öffnungen für die Zugabe von Kohle und von Eisenschwamm sowie für den Austritt des erzeugten Reduktionsgases, ferner mit Öffnungen für den Schlacken- und Roheisenabstich und mit wenigstens einem Rohr bzw. einer Düse zum Einleiten eines Gases im unteren Viertel des mittleren Abschnittes (3), wobei der Einschmelzvergaser keine Elektroden aufweist und das Rohr bzw. die Düse (7) an eine Quelle sauerstoffhaltigen Gases angeschlossen ist.

29. Anlage nach Anspruch 28, dadurch gekennzeichnet, daß wenigstens ein Rohr bzw. eine Düse (7) in der Außenwand des Gefäßes (1) vorgesehen ist.

30. Anlage nach Anspruch 28 oder 29, dadurch gekennzeichnet, daß wenigstens ein Rohr bzw. eine Düse in einer zentralen bis in den mittleren Abschnitt (3) reichenden Erhebung vorgesehen ist.

31. Anlage nach einem der Ansprüche 28 bis 30, dadurch gekennzeichnet, daß längs des Umfangs und/oder in verschiedenen Höhen mehrere Rohre bzw. Düsen (7) vorgesehen sind.

32. Anlage nach einem der Ansprüche 28 bis 31, dadurch gekennzeichnet, daß etwa in mittlerer Höhe des mittleren Abschnitts (3) wenigstens ein Rohr bzw. eine Düse (8) zum Einblasen von Wasserdampf und/oder Kohlenwasserstoffen vorgesehen ist.

**Claims**

1. A process for the production of liquid pig iron and reduction gas in a smelter gasifier, in which hot particles of sponge iron, possibly with the addition of additive materials, are melted to form liquid pig iron or steel precursor material, and the heat required for the melting operation and reducing gas are produced from feed coal and oxygen-bearing gas which is injected above the melt, characterised in that a fluidised bed of coal is formed in the smelter gasifier, the temperature in the lower region if the fluidised bed (high-temperature zone) being maintained at a value between 2 000 and 2 500 °C by the introduction of oxygen-bearing gas, the temperature of the bed decreasing in an upward direction to a value between 1 000 and 1 400 °C, and the height of the bed being at least 1.5 meters, so that a residence time in the order of magnitude of some seconds is ensured, even for larger — more than 3 mm — sponge iron particles by the dynamic pressure and uplift force in the fluidised bed.

2. A process according to claim 1 characterised in that, from a value between 2 200 and 2 400 °C in the high-temperature zone, the temperature of the fluidised bed decreases in an upward direction, to a value between 1 100 and 1 300 °C.

3. A process according to claim 1 or claim 2 characterised in that the fluidised bed substantially contains coke particles between 1 and 4 mm in size.

4. A process according to claim 3 characterised in that the fluidised bed substantially contains coke particles between 2 and 3 mm in size.

5. A process according to one of claims 1 to 4 characterised in that coal with a particle size of up to 12 mm is fed to the fluidised bed.

6. A process according to one of claims 1 to 5 characterised in that coke fines with a particle size of up to 6 mm is fed to the fluidised bed.

7. A process according to one of claims 1 to 6 characterised in that brown coal with a particle size of up to 6 mm is fed to the fluidised bed.

8. A process according to one of claims 1 to 7 characterised in that the height of the fluidised bed does not exceed 3.5 m.

9. A process according to claim 8 characterised in that the height of the fluidised bed ranges from 2 to 2.5 m.

10. A process according to one of claims 1 to 9 characterised in that a preheated oxygen-bearing gas is injected into the high-temperature zone.

11. A process according to claim 10 characterised in that preheated oxygen at a temperature of up to 450 °C is injected into the high-temperature zone.

12. A process according to claim 10 characterised in that oxygen-bearing gas at a temperature between 200 and 800 °C is injected into the high-temperature zone.

13. A process according to one of claims 1 to 12 characterised in that the oxygen-bearing gas in injected from the periphery downwards at a small angle of inclination.

14. A process according to one of claims 1 to 13 characterised in that the oxygen-bearing gas is injected from the centre downwards at a small angle of inclination.

15. A process according to one of claims 1 to 14 characterised in that the oxygen-bearing gas is injected at different angles of inclination relative to each other and/or at different levels, in an obliquely downward direction.

16. A process according to one of claims 13 to 15 characterised in that the oxygen-bearing gas is injected at angles of inclination which vary during the process.

17. A process according to one of claims 13 to 16 characterised in that the oxygen-bearing gas is injected in a vertical section which differs from the vertical section through the centre line.

18. A process according to one of claims 1 to 17 characterised in that water vapour and/or hydrocarbons are injected approximately at mid-height of the fluidised bed.

19. A process according to one of claims 1 to 18 characterised in that the speed of the gas upflow in the fluidised bed is less than 0.4 metres/second based on normal condition.

20. A process according to one of claims 1 to 19 characterised in that the working pressure in the fluidised bed is between 3 and 5 bars.

21. A process according to one of claims 1 to 20 characterised in that hot sponge iron is introduced at a temperature of about 500 to 950 °C.

22. A process according to claim 1 characterised in that hot sponge iron is introduced at a temperature of about 500 to 850 °C.

23. A process according to one of claims 1 to 22 characterised in that fine-grain ore is additionally fed to the fluidised bed.

24. A process according to one of claims 1 to 23 characterised in that at least a part of the reducing gas produced, possibly after pre-treatment, is fed to a reduction unit in which iron oxides ore directly reduced to sponge iron particles, and that the reduced sponge iron particles are fed in a hot condition to the smelter gasifier.

25. A process according to one of claims 1 to 24 characterised in that at least a part of the reducing gas produced, possibly after a pre-treatment, is injected into a blast furnase shaft.

26. A process according to one of claims 1 to 25 characterised in that at least 80 % of the hot sponge iron particles introduced have a grain size of from 3 mm to 30 mm.

27. A process according to one of claims 1 to 26 characterised in that the feed of the hot sponge iron, the coal and the oxygen-bearing gas is effected continuously, that the sponge iron, with a grain size from 0 to 25 mm, is fed in a uniformly distributed manner on to the surface of the fluidised bed, wherein the portion of particles with more than 3 mm is at least 80 % and the fine portion of particles with less than 1 mm equal or lower than 10 %, that, in the coal feed, the portion with a grain size from 1 to 12 mm is at least 70 %, and that controlling the feed amounts of oxygen-bearing gas and coal and the ratio between the amounts of oxygen-bearing gas and coal penetrates a fluidised coal bed ensuring a residence time in the order of some seconds for the sponge iron burden having a grain size from 3 to 25 mm.

28. Apparatus for carrying out the process according to one of claims 1 to 27, including a smelter gasifier comprising a vessel which has a refractory lining and a lower portion (2) for receiving crude iron and slag, a middle portion (3) which is at least 1.5 m in height for a fluidised coal bed (11) and an upper portion (4) as a stabilizing chamber (14), the inside diameter of the upper portion being larger than that of the middle portion, including openings for the feeding of coal and sponge iron and for the outlet of the reducing gas produced, and also including openings for the tapping of slag and pig iron and at least one pipe or nozzle for introducing a gas in the lower quarter of the middle portion (3), wherein the smelter gasifier has no electrodes and the pipe or nozzle (7) is connected to a source of oxygen-bearing gas.

29. Apparatus according to claim 28 characterised in that at least one pipe or nozzle (7) is provided in the outside wall of the vessel (1).

30. Apparatus according to claim 28 or claim 29 characterised in that at least one pipe or nozzle is provided in a central elevated portion which extends into the middle portion (3).

31. Apparatus according to one of claims 28 to 30 characterised in that a plurality of pipes or nozzles (7) are provided along the periphery and/or at different heights.

32. Apparatus according to one of claims 28 to 31 characterised in that at least one pipe or nozzle (8) for injecting water vapour and/or hydrocarbons is disposed approximately at mid-height of the middle portion (3).


**Revendications**


1. Procédé d'obtention de fonte liquide et de gaz de réduction dans un gazéificateur de fusion, qui consiste à fondre des particules d'éponges de fer chaudes, le cas échéant avec addition d'additifs en fonte ou en matière préaffinée liquide, et à obtenir, à partir du charbon ajouté et du gaz oxygéné insufflé au-dessus de la masse fondue, la chaleur nécessaire à la fusion et le gaz de réduction, caractérisé en ce qu'il consiste à former dans le gazéificateur de fusion un lit fluidisé de charbon, dont la température dans la région inférieure est maintenue par l'addition qui s'y effectue du gaz oxygéné à une valeur comprise entre 2 000 et 2 500 °C (zone de température élevée) dont la température décroît vers le haut jusqu'à une valeur comprise entre 1 000 et 1 400 °C, et dont la hauteur s'élève au moins à 1,5 mètre, de sorte que, même pour des particules d'éponges de fer assez grandes, ayant une dimension supérieure à 3 mm, on assure une durée de séjour de l'ordre de grandeur de quelques secondes, grâce à la force ascensionnelle et à la force due à la pression d'accumulation dans le lit fluidisé de charbon.

2. Procédé suivant la revendication 1, caractérisé en ce que la température du lit fluidisé de charbon décroît vers le haut d'une valeur comprise entre 2 200 et 2 400 °C dans la zone de haute température jusqu'à une valeur comprise entre 1 100 et 1 300 °C.

3. Procédé suivant la revendication 1 ou 2, caractérisé en ce que le lit fluidisé de charbon contient essentiellement des particules de coke d'une dimension comprise entre 1 et 4 mm.

4. Procédé suivant la revendication 3, caractérisé en ce que le lit fluidisé de charbon contient essentiellement des particules de coke d'une dimension comprise entre 2 et 3 mm.

5. Procédé suivant l'une des revendications 1 à 4, caractérisé en ce qu'il consiste à alimenter le lit fluidisé de charbon en charbon ayant une dimension de particules allant jusqu'à 12 mm.

6. Procédé suivant l'une des revendications 1 à 5, caractérisé en ce qu'il consiste à alimenter le lit fluidisé de charbon en poussier de coke ayant une dimension de particules allant jusqu'à 6 mm.

7. Procédé suivant l'une des revendications 1 à 6, caractérisé en ce qu'il consiste à alimenter le lit fluidisé de charbon en lignite d'une dimension de particules allant jusqu'à 6 mm.

8. Procédé suivant l'une des revendications 1 à 7, caractérisé en ce que la hauteur du lit fluidisé de charbon est au maximum de 3,5 mètres.

9. Procédé suivant la revendication 8, caractérisé en ce que la hauteur du lit fluidisé de charbon est comprise entre 2 et 2,5 mètres.

10. Procédé suivant l'une des revendications 1 à 9, caractérisé en ce qu'il consiste à insuffler dans la zone à haute température un gaz oxygéné réchauffé.

11. Procédé suivant la revendication 10, caractérisé en ce qu'il consiste à insuffler dans la zone à haute température de l'oxygène réchauffé ayant une température allant jusqu'à 450 °C.

12. Procédé suivant la revendication 10, caractérisé en ce qu'il consiste à insuffler dans la zone à haute température un gaz oxygéné ayant une température comprise entre 200 et 800 °C.

13. Procédé suivant l'une des revendications 1 à 12, caractérisé en ce qu'il consiste à insuffler du gaz oxygéné vers le bas à partir du bord sous une faible inclinaison.

14. Procédé suivant l'une des revendications 1 à 13, caractérisé en ce qu'il consiste à insuffler vers le bas du gaz oxygéné à partir du centre sous une faible inclinaison.

15. Procédé suivant l'une des revendications 1 à 14, caractérisé en ce qu'il consiste à insuffler vers le bas, de manière inclinée, un gaz oxygéné avec des inclinaisons différentes et/ou à des hauteurs différentes.

16. Procédé suivant l'une des revendications 13 à 15, caractérisé en ce qu'il consiste à insuffler du gaz oxygéné sous une inclinaison se modifiant au cours du processus.

17. Procédé suivant l'une des revendications 13 à 16, caractérisé en ce qu'il consiste à insuffler le gaz oxygéné dans un plan s'écartant du plan de coupe vertical passant par l'axe médian.

18. Procédé suivant l'une des revendications 1 à 17, caractérisé en ce qu'il consiste à insuffler de la vapeur d'eau et/ou des hydrocarbures, à peu près à mi-hauteur du lit fluidisé de charbon.

19. Procédé suivant l'une des revendications 1 à 18, caractérisé en ce que la vitesse du courant gazeux ascendant dans le lit fluidisé de charbon est inférieure à 0,4 mètre/seconde ramenée dans les conditions normales.

20. Procédé suivant l'une des revendications 1 à 19, caractérisé en ce que la pression de travail dans le lit fluidisé de charbon est comprise entre 3 et 5 bars.

21. Procédé suivant l'une des revendications 1 à 20, caractérisé en ce qu'il consiste à charger de l'éponge de fer chaud ayant une température de 500 à 950 °C environ.

22. Procédé suivant la revendication 21, caractérisé en ce qu'il consiste à charger de l'éponge de fer chaud ayant des températures comprises entre 500 et 850 °C environ.

23. Procédé suivant l'une des revendications 1 à 22, caractérisé en ce qu'il consiste à charger dans le lit fluidisé de charbon un appoint de minerai en grains fins.

24. Procédé suivant l'une des revendications 1 à 23, caractérisé en ce qu'il consiste à envoyer au moins une partie du gaz de réduction obtenu, le cas échéant après traitement, à un équipement de réduction dans lequel le minerai de fer oxydé est réduit directement en particules d'éponge de fer et à envoyer les particules d'éponge de fer réduites à l'état chaud au gazéificateur de fusion.

25. Procédé suivant l'une des revendications 1 à 24, caractérisé en ce qu'il consiste à insuffler au moins une partie du gaz de réduction obtenu, le cas échéant après un traitement, dans une cuve de haut fourneau.

26. Procédé suivant l'une des revendications 1 à 25, caractérisé en ce que les particules d'éponge de fer chaudes chargées ont au moins pour 80 % une granulométrie comprise entre 3 mm et 30 mm.

27. Procédé suivant l'une des revendications 1 à 26, caractérisé en ce que la charge d'éponge de fer chaude du charbon et du gaz oxygéné s'effectue en continu, l'éponge de fer ayant une granulométrie de 0 à 25 mm est répartie uniformément à la surface du lit fluidisé de charbon, la proportion dépassant 3 mm étant d'au moins 80 % et la proportion de fines particules inférieure à 1 mm étant d'au plus 10 %, la proportion de charbon chargée ayant une granulométrie de 1 à 12 mm représente au moins 70 % et, en réglant les quantités de gaz oxygéné et de charbon amenées ainsi que par leur rapport l'un par rapport à l'autre, on forme un lit fluidisé de charbon qui assure un temps de séjour de l'ordre de grandeur de quelques secondes à l'éponge de fer chargée ayant une granulométrie de 3 à 25 mm.

28. Installation pour exécuter le procédé suivant l'une des revendications 1 à 27, comprenant un gazéificateur de fusion constitué d'un récipient à garnissage réfractaire qui présente un tronçon (2) inférieur de réception de la fonte et du laitier, un tronçon (3) intermédiaire ayant une hauteur d'au moins 1,5 mètre pour un lit (11) fluidisé de charbon et, à titre de chambre (14) de tranquillisation, un tronçon (4) supérieur dont le diamètre intérieur est supérieur à celui du tronçon intermédiaire, des ouvertures étant prévues pour charger le charbon et l'éponge de fer ainsi que pour la sortie du gaz de réduction obtenu, ainsi que d'autres ouvertures pour la coulée du laitier et de la fonte, et au moins un tuyau ou une tuyère pour amener un gaz dans le quart inférieur du tronçon (3) intermédiaire, le gazéificateur de fusion ne présentant pas d'électrodes et le tuyau ou la tuyère (7) étant raccordé à une source de gaz oxygéné.

29. Installation suivant la revendication 28, caractérisée en ce qu'au moins un tuyau ou une tuyère (7) est prévu dans la paroi extérieure du récipient (1).

30. Installation suivant la revendication 28 ou 29, caractérisée en ce qu'au moins un tuyau ou une tuyère est prévu dans une surélévation centrale allant jusqu'au tronçon (3) intermédiaire.

31. Installation suivant l'une des revendications 28 à 30, caractérisée en ce que le long de la périphérie et/ou à des hauteurs différentes sont prévus plusieurs tuyaux ou buses (7).

32. Installation suivant l'une des revendications 28 à 31, caractérisée en ce qu'à peu près à mi-hauteur du tronçon (3) intermédiaire il est prévu au moins un tuyau ou une tuyère (8) pour insuffler de la vapeur d'eau et/ou des hydrocarbures.

FIG.1

# FIG.2